**Europäisches Patentamt**

**(19)** **European Patent Office**

**Office européen des brevets**

**(11)** Publication number : **0 408 286 B1**

**(12)** # EUROPEAN PATENT SPECIFICATION

**(45)** Date of publication of patent specification :
29.12.93 Bulletin 93/52

**(51)** Int. Cl.⁵ : **A21C 3/02**

**(21)** Application number : **90307475.5**

**(22)** Date of filing : **09.07.90**

**(54)** Method and apparatus for stretching dough.

**(30)** Priority : **08.07.89 JP 176655/89**

**(43)** Date of publication of application :
**16.01.91 Bulletin 91/03**

**(45)** Publication of the grant of the patent :
**29.12.93 Bulletin 93/52**

**(84)** Designated Contracting States :
**AT BE CH DE ES FR GB IT LI NL SE**

**(56)** References cited :
EP-A- 0 211 669
EP-A- 0 386 988
US-A- 2 735 379
US-A- 4 266 923
US-A- 4 692 110

**(73)** Proprietor : **RHEON AUTOMATIC MACHINERY CO. LTD.**
**2-3, Nozawa-machi**
**Utsunomiya-shi Tochigi-ken (JP)**

**(72)** Inventor : **Hayashi, Torahiko**
**3-4 Nozawa-machi**
**Utsunomiya-shi, Tochigi-ken (JP)**

**(74)** Representative : **Tomlinson, Kerry John et al**
**Frank B. Dehn & Co. European Patent Attorneys Imperial House 15-19 Kingsway London WC2B 6UZ (GB)**

EP 0 408 286 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method and apparatus for stretching dough for bread or confectionery.

Dough for bread or confectionery has been continuously stretched by various types of stretchers.

U.S. Patent No. 4,192,636 discloses an apparatus for stretching dough in which a plurality of serially disposed conveyors, each being driven at a different speed, are arranged. A roller mechanism is disposed above these conveyors. It comprises a plurality of rollers that are freely rotatable about their axes. They, constitute an endless elliptical path having a straight part spaced apart from and located over the serially disposed part of the conveyors. Also, U.S. Patent No. 4,692,110 discloses an apparatus for stretching dough in which a plurality of conveyors, each being driven at a different speed, are serially disposed. In it a roller mechanism, comprising a plurality of rollers that are freely rotatable about their axes, and that constitute a straight path, are spaced apart from and located over the serially disposed portion of the conveyors. Since in these prior apparatuses the conveying speed of the downstream conveyor is higher than that of the upstream conveyor, and the dough being conveyed by the serially disposed conveyors is gently held by the rollers that are advancing downstream or reciprocating over the surface of the dough, it is smoothly stretched.

However, the roller mechanism has a heavy and complex structure, so that it requires high production, maintenance, and repair costs. Therefore, an apparatus for stretching dough that is simple, functions steadily, and that has low production costs, has been desired.

Therefore this invention is concerned with a method and apparatus for stretching dough in which two serially disposed conveyors, and a roller that is rotatable about its axis and that is reciprocated over and longitudinally of a downstream conveyor, are arranged. According to embodiments of the invention, dough is first stretched by the effect of the different speeds of the two conveyors. It first becomes dough with a roughly stretched and uneven surface. The surface of this roughly stretched dough is then made smooth and further stretched by the rotation of the roller on the surface of the dough. Thus, the dough can be smoothly stretched by the apparatus embodying this invention, as in the prior art apparatuses.

It has been accepted that to stretch dough that has a height (H) to produce a dough strip that would have the same thickness as the distance (D) between the roller and the conveying surface of the downstream conveyor, the following formula should be met in the stretching operation:

$$V_1 / V_2 = D/H$$

wherein $(V_1)$ represents the conveying speed of the upstream conveyor, and $(V_2)$ represents the conveying speed of the downstream conveyor.

According to the apparatus embodying this invention, dough is effectively stretched when the above formula is met.

Thus according to one aspect of the invention, there is provided a method of stretching dough comprising: conveying dough from an upstream conveyor to a downstream conveyor that is disposed serially with said upstream conveyor, the conveying speed of said downstream conveyor being higher than that of said upstream conveyor, rotating a roller on the surface of the dough being moved on said downstream conveyor and reciprocating said roller over and longitudinally of said surface of the dough while it is rotated over said dough surface, the reciprocating speed of the roller being higher than the conveying speed of said downstream conveyor, characterised in that a single roller reciprocates over the surface of the dough, said roller reciprocating only over the surface of the dough on said downstream conveyor.

Thus the dough is first stretched when it is transferred from the upstream conveyor to the downstream conveyor, and then the roughly stretched dough, which has a smooth surface, is further stretched by the roller located above the downstream conveyor. Since the dough being conveyed by the downstream conveyor can be uniformly compressed by the roller that is repeatedly reciprocating over the surface of the dough, the gluten tissue of the dough does not suffer any excessive compression from the roller, and thus the dough is effectively and uniformly stretched.

According to a second aspect of the present invention, there is provided an apparatus for stretching dough comprising: an upstream conveyor, a downstream conveyor that is disposed serially with said upstream conveyor, the conveying speed of said downstream conveyor being higher than that of said upstream conveyor, rotatable roller means, and means for reciprocating said roller means by a predetermined distance along a path spaced apart from the conveying surface and longitudinally thereof, characterised in that said roller means is provided by a single roller rotatable about its axis and in that said roller is arranged to reciprocate only over the conveying surface of said downstream conveyor.

Since the apparatus of this invention only requires means for reciprocating the roller, other than a roller and a pair of conveyors, the structure of the apparatus is simple. This leads to low production costs in making the structure.

Certain embodiments of the invention will now be described by way of example only and with reference to the accompanying drawings.

Brief Description of the Drawings

Fig. 1 is a schematic side-elevational view, partly in section, illustrating a first embodiment of this invention.

Fig. 2 is a schematic perspective view, partly in section and cutaway, illustrating the first embodiment of this invention.

Fig. 3 is a schematic side-elevational view illustrating a second embodiment of this invention.

Fig. 4 is a schematic perspective view, partly in section and cutaway, illustrating the second embodiment of this invention.

Fig. 5 is a schematic elevational view, partly in section, illustrating means for determining the ratio of $V_1/V_2$ of the first and second embodiments of this invention.

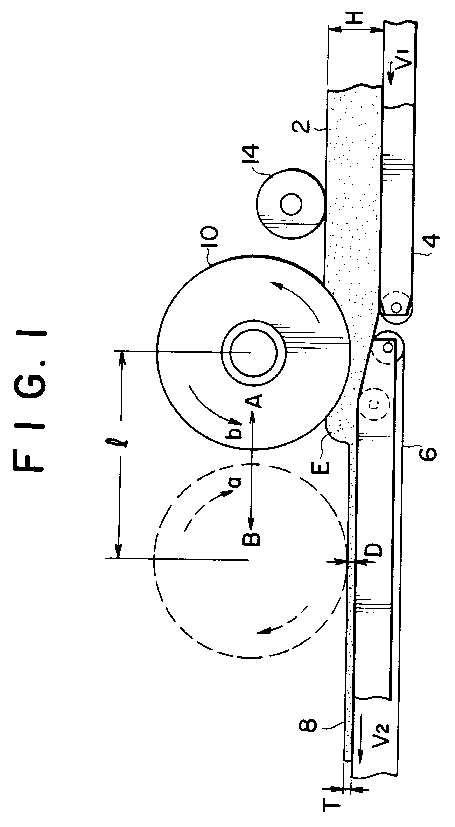

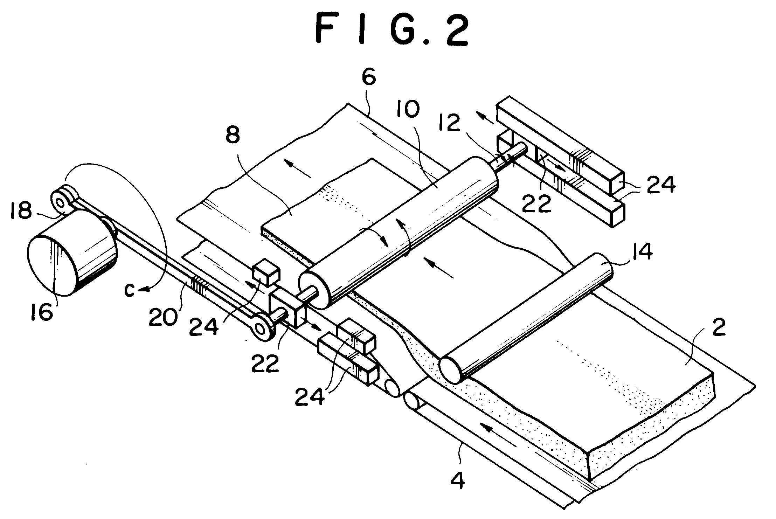

The first embodiment of this invention will now be described by reference to the drawings. In Figs. 1 and 2 an upstream conveyor (4) that is driven at speed $(V_1)$, a downstream conveyor (6) that is driven at speed $(V_2)$ that is higher than the speed $(V_1)$, a roller (10), and a level sensing roller (14), are arranged. The roller (10) is provided with a shaft (12), about which the roller freely rotates through bearing means (not shown) mounted on the shaft (12). The roller (10) may be rotated by the rolling contact with the surface of the dough when it is moved by the downstream conveyor (6). A motor (16) is arranged adjacent the downstream conveyor (6) and mounted to a frame (not shown). One end of a crank (18) is connected to the shaft of the motor (16) and the other end of the crank (18) is connected to one end of a crank rod (20) by a pin. The other end of the crank rod (20) is pivotally connected to one end of the shaft (12). Sliders (22,22) are fixedly or rotatably mounted to the shaft (12), each being adjacent either end of the shaft (12). Guides (24,24...), partly cut away in Fig.2, are mounted to the frame such that both sliders (22,22) can slide within slots formed by the respective pairs of guides (24,24...) arranged side-by-side. The sliders (22,22) allow the shaft (12) to reciprocate within the slots in accordance with the reciprocating movement of the crank rod (20), and also allow the shaft (12) to be rotated in the sliders (22,22) by bearing means (not shown) mounted within the sliders (22,22).

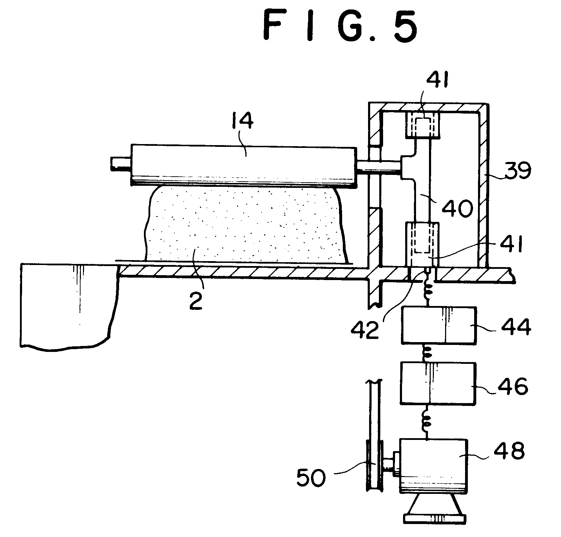

In Fig. 5, the shaft of the level sensing roller (14) is mounted to a bracket (40) that is adapted to move up and down within recesses (41,41) that are mounted to a frame (39). The level sensing roller (14) moves up and down in response to the change of the height (H) of the dough (2), while rolling on its surface to transmit height information to a height signal generating means (42). The level sensing roller (14), the bracket (40), and the height signal generating means (42), all compose a sensor (14,40,42) for detecting the height (H) of the dough (2). The height signal generating means (42) generates height information signals and sends them to an arithmetic unit (44) in which the height information signals are converted into signals for changing the frequency of an electrical source to be supplied to a motor (48). These signals are sent to an inverter (46). In the inverter (46) the frequency is changed to a frequency that changes the output of the motor (48) that drives the upstream conveyor (4) through a belt (50).

When the motor (16) is energized, the crank (18) is rotated to reciprocate the crank rod (20). The roller (10) is reciprocated over a distance $(\ell)$. This is a reciprocating stroke. A distance (D) is kept between the roller (10) and the conveying surface of the downstream conveyor (6). The distance (D) can be adjusted to a desired value by an adjusting means (not shown). Dough (2) that has a height (H) is conveyed from the upstream conveyor (4) to the downstream conveyor (6).

There is provided a difference in speed between the upstream conveyor (4) that is driven at speed $(V_1)$ and the downstream conveyor (6) that is driven at speed $(V_2)$ such that the ratio of the speed of the upstream conveyor (4) to the speed of the downstream conveyor (6) is usually set at 1/5 or less. Therefore, the dough is stretched between these conveyors to a substantial degree. The dough transferred onto the downstream conveyor (6) is further stretched by the reciprocating movement of the roller while the surface of the dough is made smooth.

Fig.1 shows a portion (E) of the dough (2) and the roller (10) where the roller (10) just begins to move in a direction indicated by an arrow (B) and to roll in a direction indicated by an arrow (b). The portion (E) shows the bulge of the dough (2), which instantly occurs when the roller (10) starts moving. Preferably the linear reciprocating speed of the roller is higher than the conveying speed $V_2$ of the downstream conveyor (6). The reason is that the roller (10) should roll over the surface of the dough, in the direction (b), by the rolling friction with the dough, thereby spreading the dough downstream. Thus, the roller (10), when it is moved in the direction (B), spreads and stretches the portion (E) of the dough (2). When the roller (10) reaches the downstream end of the reciprocating stroke of the roller (10), the distance of which stroke equals $(\ell)$, it is moved in a direction indicated by an arrow (A), while rolling over the surface of the dough in a direction indicated by an arrow (a). When the roller (10) reaches the upstream end of the reciprocating stroke of the roller (10), it again begins to move in the direction (B), while spreading and stretching the next portion (E) of the dough (2). Thus, the dough (2) is continuously stretched by reciprocating movements of the roller (10) over the distance $(\ell)$.

Since the dough being conveyed by the downstream conveyor (6) receives uniform compression by the roller (10) that is repeatedly reciprocating over the surface of the dough, the gluten tissue of the dough does not suffer any excessive compression from the roller (10). Thus, the dough (8) is effectively and uniformly stretched. The distance (D) is set at about equal to a thickness (T), which is the desired thickness of the dough (8), or set at somewhat less than the thickness (T).

The dough can be stretched based on the relationship of the height (H) of the dough, the distance (D) between the roller and the conveying surface of a downstream conveyor, the conveying speed ($V_1$) of the upstream conveyor, and the conveying speed ($V_2$) of the downstream conveyor, namely, based on the following formula:

$$V_1/V_2 = D/H$$

Therefore, if the height (H) varies it is necessary for the upstream conveyor to change its conveying speed ($V_1$). As mentioned above, the height (H) is sensed by the level sensing roller (14), and the height information is sent to the arithmetic unit (44) through the height information signal generating means (42). The arithmetic unit (44) computes the ratio $V_1/V_2$, based on the following formula, to automatically determine the speed $V_1$ :

$$V_1/V_2 = D/H$$

A signal that indicates the speed $V_1$ is sent from the arithmetic unit (44) to the inverter (46). The inverter (46) changes the frequency of an electrical source for the motor (48) to a frequency that changes the number of rotations of the motor (48) so that the motor (48) causes the upstream conveyor (4) to be driven at a changed speed $V_1$ . Therefore, even though the height (H) of the dough (2) supplied from the preceding station varies irregularly, the speed ($V_1$) of the upstream conveyor (4) is automatically determined, so that the desired thickness (T) of the dough (8) can be continuously obtained. When the motor (16) is driven, the crank (18) is rotated to reciprocate the crank rod (20). Thus the roller (10) is reciprocated by a distance ($\ell$), while maintaining a distance (D), and while rolling over the surface of the dough, the rolling being caused by friction with the dough.

In this embodiment the operation is carried out under the following conditions:
Speed $V_1$ of the upstream conveyor: about 2m/min
Speed $V_2$ of the downstream conveyor: about 10m/min
Height (H) of dough to be stretched: about 50mm
Distance (D) of the gap: about 10mm
Diameter of the roller (10): about 100mm
Stroke of the reciprocating movement of the roller (10): about 400mm
The number of the reciprocating movements of the roller (10) : about 150/min (300 strokes/min)

In this embodiment the formula $V_1/V_2 = D/H$, using the above numbers, can be expressed as 2m/10m=10mm/50mm. The thickness (T) of the dough (8) after stretching was about 10mm. If the height (H) of the dough to be stretched changes from 50mm to 40mm, the formula $V_1/V_2 = D/H$ can be expressed as 2.5m/10m=10mm/40mm. Therefore, the speed $V_1$ of the upstream conveyor is changed to about 2.5m/min, so that the thickness (T) of the stretched dough (8) is always kept at about 10mm during the operation.

The number of the reciprocating movements of the roller(10) may be in the range of from about 100 to 200 per minute. The distance of the reciprocating movement of the roller (10) may be in the range of from about 100mm to 500mm.

The second embodiment of this invention will now be described by reference to the drawings. Regarding the upstream conveyor (4), the downstream conveyor (6), the roller (10), the level sensing roller (14), the motor (16), the crank (18), and the crank rod (20), they are all arranged as in the first embodiment. However, the following points are different:

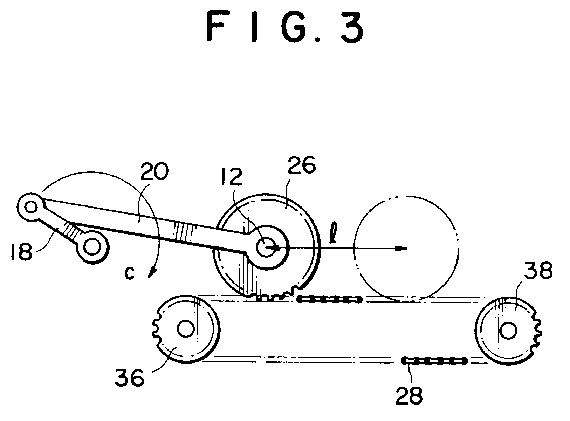

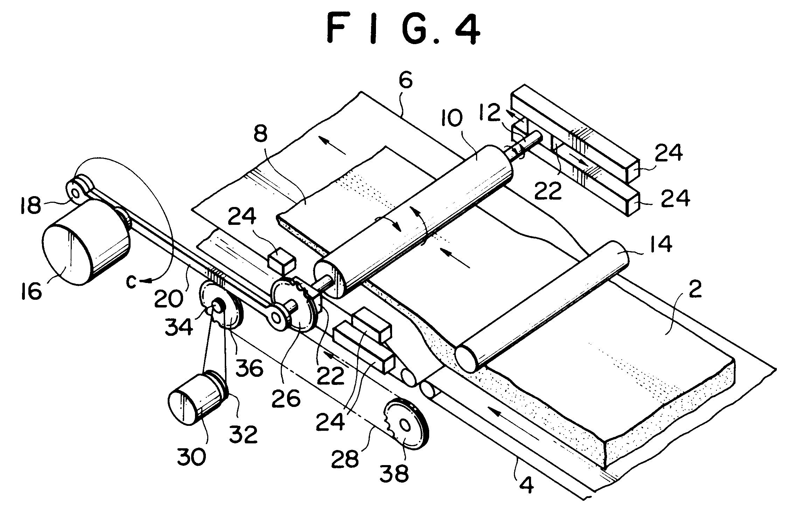

As shown in Figs. 3 and 4, the roller (10) is fixedly mounted to the shaft (12), and a sprocket (26) is also fixedly mounted to the shaft (12) near one end of it. The shaft (12) is adapted to be always rotatable relative to the sliders (22,22) by the bearing means. The pitch circle diameter of the sprocket (26) is usually made to be equal to the diameter of the roller (10). Sprockets (36,38) are arranged near the downstream conveyor (6), and an endless chain (28) is entrained over the sprockets (36,38). The endless chain (28) engages the sprocket (26). The sprocket (36) is driven by a motor (30). The rotational power of the motor (30) is transmitted to the sprocket (36) through a pulley (32), which is mounted to the shaft of the motor (30), a belt entrained over the pulley (32) and a pulley (34), which is mounted to the shaft of the sprocket (36). The endless chain (28) is adapted to move in the same direction as the conveying direction of the downstream conveyor (6), and usually at the same speed as its conveying speed $V_2$.

When the motors (16,30) are energized, the crank rod (20) gives the reciprocating movement to the shaft (12) of the roller (10), and the chain (28) is also moved. The roller (10) is forcibly rotated by the engagement of the sprocket (26) with the chain (28) when the roller (10) is reciprocated. Since the pitch circle diameter of the sprocket (26) and that of the roller (10) are about the same, and the chain (28) is moved in synchronization with the movement of the downstream conveyor (6), the roller (10) rolls on the surface of the dough conveyed by the downstream conveyor, like the roller (10) that rolls by the rolling friction with the dough as in the first embodiment. Since no slipping occurs between the surface of the roller (10) and the surface of the dough, which slipping may occasionally occur in the operation as in the first embodiment, the roller (10) can roll over all of the surface of the dough and stretch it.

The pitch circle diameter of the sprocket (26) may be changed to a somewhat larger or smaller one. If the pitch circle diameter of the sprocket (26) is designed to be smaller than the diameter of the roller (10), in order to have the roller (10) rotate at the same speed as the conveying speed of the conveyor (6), it is necessary for the moving speed of the chain (28) to be reduced. Also, in this embodiment, since the rolling action of the roller is repeated many times, the dough receives uniform compression by the roller (10). Therefore, the gluten tissue of the dough does not receive any excessive compression from the roller (10), unlike in the prior art.

During the operation of this embodiment the speeds $V_1$ and $V_2$, the height (H), the distance (D), the diameter of the roller (10), the stroke of reciprocating movement of the roller (10), and the number of the reciprocating movements of the roller (10) per minute, were the same as in the first embodiment. The moving speed of the endless chain (28) was about 10mm/min, and dough of a thickness of about 10mm was continuously obtained.

In this embodiment, where the roller is forcibly rotated in either direction of its movement, a bulge of the dough like the portion (E) appearing in the downstream side of the roller (10) also occasionally occurs in the upstream side of the roller (10), during its movement upstream, or when it reaches the upstream end of its stroke. This bulge can be ordinarily spread when the roller moves downstream. It can be stretched by repeating the reciprocating movement of the roller (10). However, the occurrence of such a bulge of dough, can be avoided by applying a tangential force toward the downstream direction by the rotation of the roller (10) onto the surface of the dough. This can be carried out by increasing the linear speed of the endless chain (28) whereby the peripheral speed of the roller (10) is made higher than the conveying speed of the downstream conveyor (6). Thus, any bulge of dough is avoided, or, if it does occur, it is pushed away behind the roller (10) when the roller (10) is so forcibly rotated.

Such a forcible driving of the roller (10) can also be carried out by providing a friction plate (not shown) disposed below the reciprocating path of the roller (10) so as to engage the surface of the roller (10), in place of arranging the endless chain (28) and its related means and the sprocket (26). Also, friction wheels (not shown) that have a diameter smaller, or larger, than the diameter of the roller (10), can be fixedly mounted to the shaft (12) of the roller (10), so that the peripheral speed of the roller (10) can be adjusted.

The peripheral speed of the roller (10) may be made higher than the conveying speed of the downstream conveyor (6) when the roller (10) is moved downstream. In this case the forcible driving of the roller (10) may also be carried out, either by the the combination of the chain and the sprocket, or by the combination of the friction plate and the friction wheel.

As described above, by the method of this invention the dough being conveyed by the downstream conveyor receives a uniform compression by the rotation of the roller, which is repeatedly reciprocating over the surface of the dough, and the gluten tissue of the dough does not suffer any excessive compression from the roller. Therefore, the dough is effectively and uniformly stretched, while the dough's elasticity is kept.

Also, since, other than a roller and a pair of conveyors, the apparatus of this invention does not require much more than means for reciprocating the roller, the structure of the apparatus is simple. This results in its low production costs.

## Claims

1. A method of stretching dough comprising: conveying dough (2) from an upstream conveyor (4) to a downstream conveyor (6) that is disposed serially with said upstream conveyor (4), the conveying speed of said downstream conveyor (6) being higher than that of said upstream conveyor (4), rotating a roller on the surface of the dough being moved on said downstream conveyor (6), and reciprocating said roller (10) over and longitudinally of said surface of the dough while it is rotated over said dough surface, the reciprocating speed of the roller being higher than the conveying speed of said downstream conveyor (6), characterised in that a single roller (10) reciprocates over the surface of the dough, said roller (10) reciprocating only over the surface of the dough on said downstream conveyor.

2. The method of claim 1, in which the absolute peripheral speed of said roller (10) is the same as the conveying speed of said downstream conveyor (6).

3. The method of claim 2, in which said roller (10) rolls over the dough surface by a rolling contact with the dough surface.

4. The method of claim 2, in which said roller (10) is rotated by forcibly driving it.

5. An apparatus for stretching dough comprising: an upstream conveyor (4), a downstream conveyor (6) that is disposed serially with said upstream conveyor (4), the conveying speed of said downstream conveyor (6) being higher than that of said upstream conveyor (4), rotatable roller means (10), and means (16, 18, 20) for reciprocating said roller means (10) by a predetermined distance (1) along a path spaced apart from the conveying surface and longitudinally thereof, characterised in that said roller means is provided by a single roller (10) rotatable about its axis and in that said roller (10) is arranged to reciprocate only over the conveying surface of said downstream conveyor (6).

6. The apparatus of claim 5, characterized in that said roller (10) is freely rotatable about its axis.

7. The apparatus of claim 5, characterized in that said apparatus is also provided with means for forcibly rotating said roller (10) at about the same speed as the conveying speed of said downstream conveyor (6).

8. The apparatus of claim 5, characterised in that said apparatus is also provided with means for forcibly rotating said roller (10) at a greater speed than the conveying speed of said downstream conveyor (6).

9. The apparatus of claim 7 or 8, characterized in that said rotating means comprises a sprocket (26) mounted to the shaft (12) of said roller (10), and an endless chain (28) that engages said sprocket (26) and that moves in the same direction as the moving direction of said downstream conveyor (6) at about the same speed as the conveying speed of said downstream conveyor (6).

10. The apparatus of claim 7 or 8, characterised in that said rotating means comprises a sprocket (26) mounted to the shaft (12) of said roller (10), and an endless chain (28) that engages said sprocket (26) and moves in the same direction as the moving direction of said downstream conveyor (6) at a greater speed than the conveying speed of said downstream conveyor (6).

11. The apparatus of claim 5, characterized in that said apparatus is also provided with a sensor (14,40,42) arranged adjacent said upstream conveyor 4 for detecting the height (H) of dough (2) being conveyed by said upstream conveyor (4), and means (44) for determining the ratio of the speed of said upstream conveyor (4) in relation to the speed of said downstream conveyor (6), based on the following formula:

$$H \times V_1 = D \times V_2$$

wherein $V_1$ is the speed of said upstream conveyor (4), (D) is the distance between said roller (10) and the conveying surface of said downstream conveyor (6), and $V_2$ is the speed of said downstream conveyor (6).

**Patentansprüche**

1. Verfahren zum Strecken von Teig, umfassend: das Fördern von Teig (2) von einem stromaufwärtigen Förderer (4) zu einem stromabwärtigen Förderer (6), der in Reihe mit dem stromaufwärtigen Förderer (4) angeordnet ist, wobei die Fördergeschwindigkeit des stromabwärtigen Förderers (6) höher als diejenige des stromaufwärtigen Förderers (4) ist, das Drehen einer Rolle auf der Oberfläche des Teigs, der auf den stromabwärtigen Förderer (6) bewegt wird, und das Hin- und Herbewegen der Rolle (10) auf der Oberfläche des Teigs und in Längsrichtung dieser Oberfläche, während sie über die Teigoberfläche gedreht wird, wobei die Geschwindigkeit der Hin- und Herbewegung der Rolle höher ist als die Fördergeschwindigkeit des stromabwärtigen Förderers (6),
dadurch **gekennzeichnet,** daß eine einzige Rolle (10) sich über die Oberfläche des Teigs hin- und herbewegt und die Rolle (10) sich lediglich über die Oberfläche des Teigs auf dem stromabwärtigen Förderer hin- und herbewegt.

2. Verfahren nach Anspruch 1, wobei die absolute Umfangsgeschwindigkeit der Rolle (10) die gleiche ist wie die Fördergeschwindigkeit des stromabwärtigen Förderers (6).

3. Verfahren nach Anspruch 2, wobei die Rolle (10) über die Teigoberfläche rollt mittels einer Rollberührung mit der Teigoberfläche.

4. Verfahren nach Anspruch 2, wobei die Rolle (10) durch kraftvolles Antreiben gedreht wird.

5. Vorrichtung zum Strecken von Teig, umfassend: einen stromaufwärtigen Förderer (4), einen stromabwärtigen Förderer (6), der in Reihe mit dem stromaufwärtigen Förderer (4) angeordnet ist, wobei die Fördergeschwindigkeit des stromabwärtigen Förderers (6) höher als diejenige des stromaufwärtigen Förderers (4) ist, eine drehbare Rolleneinrichtung (10) und eine Einrichtung (16, 18, 20) zum Hin- und Herbewegen der Rolleneinrichtung (10) über eine vorbestimmte Strecke ($\ell$) entlang eines Weges im Abstand von der Förderfläche und in deren Längsrichtung,
dadurch **gekennzeichnet,** daß die Rolleneinrichtung durch eine einzige Rolle (10) geschaffen ist, die um ihre Achse drehbar ist, und daß die Rolle (10) so angeordnet ist, daß sie sich lediglich über die Förderfläche des stromabwärtigen Förderers (6) hin- und herbewegt.

6. Vorrichtung nach Anspruch 5, dadurch gekennzeichnet, daß die Rolle (10) um ihre Achse frei drehbar ist.

7. Vorrichtung nach Anspruch 5, dadurch gekennzeichnet, daß die Vorrichtung weiterhin mit einer Einrichtung versehen ist zum kraftvollen Drehen der Rolle (10) mit etwa der gleichen Geschwindigkeit wie die Fördergeschwindigkeit des stromabwärtigen Förderers (6).

8. Vorrichtung nach Anspruch 5, dadurch gekennzeichnet, daß die Vorrichtung weiterhin mit einer Einrichtung versehen ist zum kraftvollen Drehen der Rolle (10) mit einer Geschwindigkeit, die höher ist als die Fördergeschwindigkeit des stromabwärtigen Förderers (6).

9. Vorrichtung nach Anspruch 7 oder 8, dadurch gekennzeichnet, daß die Dreheinrichtung ein Kettenrad (26), welches an der Welle (12) der Rolle (10) angebracht ist, und eine endlose Kette (28) aufweist, die mit dem Kettenrad (26) im Eingriff steht und sich in der gleichen Richtung wie die Bewegungsrichtung des stromabwärtigen Förderers (6) mit etwa der gleichen Geschwindigkeit wie die Fördergeschwindigkeit des stromabwärtigen Förderers (6) bewegt.

10. Vorrichtung nach Anspruch 7 oder 8, dadurch gekennzeichnet, daß die Dreheinrichtung ein Kettenrad (26), das an der Welle (12) der Rolle (10) angebracht ist, und eine endlose Kette (28) aufweist, die mit dem Kettenrad (26) im Eingriff steht und sich in der gleichen Richtung wie die Bewegungsrichtung des stromabwärtigen Förderers (6) mit einer Geschwindigkeit bewegt, die höher als die Fördergeschwindigkeit des stromabwärtigen Förderers (6) ist.

11. Vorrichtung nach Anspruch 5, dadurch gekennzeichnet, daß die Vorrichtung weiterhin mit einem Fühler (14, 40, 42), der nahe dem stromaufwärtigen Förderer (4) angeordnet ist zum Feststellen der Höhe (H) des Teigs (2), der von dem stromaufwärtigen Förderer (4) gefördert wird, und einer Einrichtung (44) versehen ist zum Bestimmen des Verhältnisses der Geschwindigkeit des stromaufwärtigen Förderers (4) in Relation zu der Geschwindigkeit des stromabwärtigen Förderers (6), basierend auf der nachstehenden Formel:
$$H \times V_1 = D \times V_2,$$
worin $V_1$ die Geschwindigkeit des stromaufwärtigen Förderers (4), (D) der Abstand zwischen der Rolle (10) und der Förderfläche des stromabwärtigen Förderers (6), und $V_2$ die Geschwindigkeit des stromabwärtigen Förderers (6) sind.

## Revendications

1. Procédé d'étirage de pâte, consistant :
   à transporter de la pâte (2) d'un transporteur d'amont (4) à un transporteur d'aval (6) qui est disposé en série avec ledit transporteur d'amont (4), la vitesse de transport dudit transporteur d'aval (6) étant plus élevée que celle dudit transporteur d'amont (4), à faire tourner un rouleau sur la surface de la pâte déplacée sur ledit transporteur d'aval (6), et à animer d'un mouvement alternatif ledit rouleau (10) au-dessus de ladite surface de la pâte et longitudinalement à elle pendant qu'il est tourné sur ladite surface de la pâte, la vitesse du mouvement alternatif du rouleau étant plus élevée que la vitesse de transport dudit transporteur d'aval (6), caractérisé en ce qu'un rouleau unique (10) est animé d'un mouvement alternatif au-dessus de la surface de la pâte, ledit rouleau (10) étant animé d'un mouvement alternatif uniquement au-dessus de la surface de la pâte sur ledit transporteur d'aval.

2. Procédé selon la revendication 1, dans lequel la vitesse périphérique absolue dudit rouleau (10) est égale à la vitesse de transport dudit transporteur d'aval (6).

3. Procédé selon la revendication 2, dans lequel ledit rouleau (10) roule au-dessus de la surface de la pâte par un contact de roulement avec la surface de la pâte.

4. Procédé selon la revendication 2, dans lequel ledit rouleau (10) est mis en rotation en étant entraîné à force.

5. Appareil d'étirage de pâte, comportant :
   un transporteur d'amont (4), un transporteur d'aval (6) qui est disposé en série avec ledit transporteur d'amont (4), la vitesse de transport dudit transporteur d'aval (6) étant plus élevée que celle dudit transporteur d'amont (4), un moyen à rouleau tournant (10), et des moyens (16, 18, 20) destinés à animer d'un mouvement alternatif ledit moyen à rouleau (10) sur une distance prédéterminée (1) le long d'un trajet espacé de la surface de transport et longitudinalement à elle, caractérisé en ce que ledit moyen à rouleau est pourvu d'un rouleau unique (10) pouvant tourner sur son axe et en ce que ledit rouleau (10) est agencé de façon à exécuter un mouvement alternatif uniquement au-dessus de la surface de transport dudit transporteur d'aval (6).

6. Appareil selon la revendication 5, caractérisé en ce que ledit rouleau (10) peut tourner librement sur son axe.

7. Appareil selon la revendication 5, caractérisé en ce que ledit appareil est également pourvu de moyens pour faire tourner à force ledit rouleau (10) sensiblement à la même vitesse que la vitesse de transport dudit transporteur d'aval (6).

8. Appareil selon la revendication 5, caractérisé en ce que ledit appareil est également pourvu de moyens pour faire tourner à force ledit rouleau (10) à une vitesse supérieure à la vitesse de transport dudit transporteur d'aval (6).

9. Appareil selon la revendication 7 ou 8, caractérisé en ce que lesdits moyens pour faire tourner le rouleau comprennent une roue dentée (26) montée sur l'arbre (12) dudit rouleau (10), et une chaîne sans fin (28) qui engrène avec ladite roue dentée (26) et qui se déplace dans le même sens que le sens de déplacement dudit transporteur d'aval (6), sensiblement à la même vitesse que la vitesse de transport dudit transporteur d'aval (6).

10. Appareil selon la revendication 7 ou 8, caractérisé en ce que lesdits moyens pour faire tourner le rouleau comprennent une roue dentée (26) montée sur l'arbre (12) dudit rouleau (10), et une chaîne sans fin (28) qui engrène avec ladite roue dentée (26) et qui se déplace dans le même sens que le sens de déplacement dudit transporteur d'aval (6), à une vitesse supérieure à la vitesse de transport dudit transporteur d'aval (6).

11. Appareil selon la revendication 5, caractérisé en ce que ledit appareil est également pourvu d'un capteur (14, 40, 42) agencé de façon à être adjacent audit transporteur d'amont (4) pour détecter la hauteur (H) de la pâte (2) transportée par ledit transporteur d'amont (4), et un moyen (44) pour déterminer le rapport de la vitesse dudit transporteur d'amont (4) à la vitesse dudit transporteur d'aval (6), sur la base de la formule suivante :

$$HXV_1 = DXV_2$$

dans laquelle $V_1$ est la vitesse dudit transporteur d'amont (4), D est la distance entre ledit rouleau (10) et la surface de transport dudit transporteur d'aval (6), et $V_2$ est la vitesse dudit transporteur d'aval (6).

# FIG. 1

EP 0 408 286 B1

# F I G . 2

EP 0 408 286 B1

F I G. 3

# F I G. 4

EP 0 408 286 B1

# FIG. 5